# EUROPÄISCHE PATENTSCHRIFT

(11) **EP 3 205 564 B1**
(45) Veröffentlichungstag und Bekanntmachung des Hinweises auf die Patenterteilung: **19.06.2019**
(21) Anmeldenummer: 17152331.9
(22) Anmeldetag: 20.01.2017
(51) Int. Cl.: B62K 7/04, B62K 5/10, B62K 5/027, B62K 25/04, B62K 5/06, B62K 27/12, B62L 3/06, B62K 19/46, B62K 27/00, B62M 6/45, B62M 6/60, B62M 6/90, B62M 9/02, B62M 17/00, B62M 19/00, B62D 53/06, B62D 53/08, B62K 5/00

(54) **LASTEN-FAHRRAD**
LOAD-CARRYING BICYCLE
VÉLO CARGO

(30) Priorität: 21.01.2016 DE 102016101033; 25.08.2016 DE 102016115803; 28.10.2016 DE 102016120697
(43) Veröffentlichungstag der Anmeldung: 16.08.2017
(73) Patentinhaber: Weber, Herbert, 82354 Breitbrunn (DE)
(72) Erfinder: Weber, Herbert, 82354 Breitbrunn (DE)
(74) Vertreter: Weickmann & Weickmann PartmbB

(56) Entgegenhaltungen:
- CN-U- 204 871 381
- FR-A1- 2 957 049
- FR-A1- 3 020 335
- KR-A- 20120 040 850
- NL-A- 1 038 622
- US-A- 3 605 929
- US-A- 6 104 154

## Beschreibung

### I. Anwendungsgebiet

Die Erfindung betrifft Lasten-Fahrräder, um Lasten zu transportieren und damit auch entlang von Radwegen oder Fußwegen fahren so können.

### II. Technischer Hintergrund

Lasten-Fahrräder sind in unterschiedlichen Ausführungsformen bekannt:
Es sind einerseits einspurige Lasten-Fahrräder bekannt, bei denen jedoch die Tragfähigkeit sehr begrenzt ist.

Es sind andererseits Lastenfahrräder bekannt, bei denen das Chassis, also der Rahmen, so gestaltet ist, dass der vordere Teil von der Sattelstrebe aus nach vorne, der Fahrerteil, konventionell gestaltet ist, also mit einem einzigen, lenkbaren Vorderrad, während der hintere Teil des Chassis, das Lasten-Teil, eine Ladeplattform trägt.

Die Ladeplattform wird in der Regel von zwei nebeneinander liegenden, meist neben der Ladeplattform nach oben aufragenden, Rädern abgestützt, was bewirkt, dass die Ladefläche nicht von allen Seiten frei zugänglich ist, und darüber hinaus, dass die Breite des Fahrzeuges deutlich breiter ist als die Breite der Ladefläche.

Die Ladefläche kann sich alternativ auch vor dem Fahrer befinden, welcher entweder das dritte Rad lenkt oder bei einer vorne liegenden Ladeplattform auch die beiden Räder der Ladeplattform.

Da der Trend bei Lasten-Fahrrädern zu immer größeren Nutzlasten geht und insbesondere beispielsweise eine Euro-Palette auf der Ladeplattform Platz finden soll, sind die bisher angewandten Bauformen hinsichtlich Stabilität, Lenkbarkeit und auch Komfort nicht mehr ausreichend, obwohl es bereits bekannt ist, den Antrieb unterstützt oder ausschließlich durch Elektro-Motoren zu realisieren.

In diesem Zusammenhang sind aus der FR 3020335 der US 3605929 und der US 6104154 dreirädrige Lastenräder bekannt, bei denen der Fahrer auf einem vorderen Fahrrad-Teil mit dem mittigen, lenkbaren Vorderrad sitzt, welches um eine horizontale Längsachse für Kurvenfahrt verschwenkbar ist gegenüber dem hinteren Lastenteil, welches zwei nebeneinander angeordnete Hinterräder umfasst. Die Lastenräder sind jeweils über einen Elektromotor angetrieben, der bei der US 3605929 das Vorderrad antreibt, bei der US 6104154 die Hinterräder und ebenso bei FR 3020335**.**

Bei der US 6104154 ist zusätzlich ein Tretantrieb am Fahrrad-Teil vorhanden, mit dem das Lasten-Fahrrad ebenfalls bewegt werden kann.

Weiterhin ist es aus der KR 10 2012 004 0850**,** die den nächstreichenden Stand der Technik darstellt, bekannt, dass bei einem solchen um die Längsachse verschwenkbaren, zweiteiligen Lastenrad zwei getrennte Motoren vorhanden sind, von denen jeweils eines der Hinterräder angetrieben wird.

Aus dieser Schrift ist es weiterhin bekannt, den Schwenkwinkel zwischen dem vorderen Fahrrad-Teil und dem hinteren Lasten-Teil zu detektieren, denn die Neigung des Lastenrades soll gesteuert werden.

### III. Darstellung der Erfindung

### a) Technische Aufgabe

Es ist daher die Aufgabe gemäß der Erfindung, ein einfach herzustellendes, auch unter hoher Beladung sicher fahrbares und entsprechend stabiles Lasten-Fahrrad mit einem - zumindest zusätzlich zu einem Tret-Antrieb vorhandenen - Elektro-Antrieb zur Verfügung zu stellen.

### b) Lösung der Aufgabe

Diese Aufgabe wird durch die Merkmale des Anspruchs 1 gelöst. Vorteilhafte Ausführungsformen ergeben sich aus den Unteransprüchen.

Das Lasten-Fahrrad besitzt ein Chassis bestehend aus einem Fahrer-Teil und einem Lasten-Teil.

Dabei umfasst der Fahrer-Teil des Chassis - wie der vordere Teil eines normalen Fharrads - einen daran befestigten Sattel für den Fahrer, eine darin drehbar gelagerte Gabel, mit einem drehfest daran befestigten Lenker und einem darin gelagerten Vorderrad.

Das Lasten-Teil des Chassis umfasst eine Ladeplattform, zwei in Querrichtung zur Fahrtrichtung zueinander beabstandete, daran befestigte Hinterräder und zwei elektrische Motoren, die mit je einem der Hinterräder wirkverbunden sind.

Das Lasten-Fahrrad ist vorzugsweise auch allein, also ausschließlich, ohne z.B. Tretunterstützung, elektrisch antreibbar. Vorzugsweise ist wenigstens eines der Hinterräder auch über einen zusätzlichen Tret-Antrieb antreibbar.

Am Fahrradteil des Chassis ist, insbesondere am Lenker, ein Geschwindigkeitsgeber vorhanden, mittels dessen der Fahrer die Geschwindigkeit des elektrischen Antriebs regelt, in dem die Signale des Geschwindigkeitsgebers an eine Steuerung übermittelt werden, welche die zwei Elektromotoren entsprechend ansteuert, welche aus am oder im Chassis befestigten Batterien gespeist werden.

Erfindungsgemäß ist an einem solchen Lastenfahrrad ein Lenker-Sensor angeordnet, der den Einschlagwinkel des Vorderrades gegenüber dem Chassis misst und vorzugsweise am Steuerrohr bzw. zwischen Steuerrohr und Gabelschaft angeordnet ist. Der Lenker-Sensor ist signaltechnisch mit der Steuerung verbunden.

Da jedes der beiden Hinterräder über einen separaten, mittels der Steuerung unabhängig voneinander steuerbaren, Elektromotor angetrieben wird, steuert bei Kurvenfahrt die Steuerung die Motoren in Abhängigkeit der Signale des Lenker-Sensors, also in der Regel das kurvenäußere Hinterrad mit einer höheren Drehzahl als das kurveninnere Hinterrad.

Ist der Fahrerteil des Chassis um eine in Längsrichtung des Chassis, also normalerweise die Fahrtrichtung, verlaufende horizontale Neigungsachse gegenüber dem Lasten-Teil des Chassis schwenkbar, kann sich der Fahrer-teil des Chassis "in die Kurve legen" kann, also auch ohne Lenker-Einschlag der gesamte vordere Fahrerteil des Chassis einschließlich des Vorderrades zur Seite neigen.

Vorzugsweise ist zu diesem Zweck der Unterzug des Fahrerteils des Chassis um eine etwa horizontale Neigungsachse schwenkbar gegenüber dem Lasten-Teil des Chassis. Der Verschwenk-Winkel, also die Neigung des Fahrerteils des Chassis gegenüber dem Ladeteil des Chassis wird mittels eines Neigungssensors gemessen, der ebenfalls signaltechnisch mit der Steuerung in Verbindung steht, sodass die Steuerung auch dessen Signale bei der Steuerung der Drehzahlen der beiden Motoren für die beiden Hinterräder berücksichtigt und insbesondere den Motor desjenigen Hinterrades, zu dessen Seite hin der Lenker geneigt wird, langsamer ansteuert als den Motor des anderen Hinterrades.

Der Neigungssensor ist vorzugsweise an der Lagerungsstelle, also vorzugsweise zwischen dem Unterzug des Fahrerteils und dem Lasten-Teil des Chassis angeordnet.

Dabei spielt natürlich nicht nur der Neigungswinkel eine Rolle, sondern eben auch die in diesem Fahrzustand festgestellte Ist-Geschwindigkeit, weshalb das Lastenfahrrad vorzugsweise auch entweder Drehzahl-Sensoren an jedem der beiden Hinterräder und/oder einen Geschwindigkeitssensor aufweist, welcher zumindest die Drehzahl des Vorderrades ermittelt oder noch besser direkt die Geschwindigkeit des Lastenfahrrades über Grund.

Durch die Berücksichtigung nicht nur der Signale des Geschwindigkeitsgebers, sondern zusätzlich auch des Neigungswinkels des Vorderteils des Fahrrades gegenüber dem Hinterteil sowie dem Einschlagwinkel des Lenkers wird die Kurvenfahrt optimal bei der Steuerung der beiden separaten Hinterrad-Motoren berücksichtigt, wodurch das Fahrrad auch mit hoher Beladung - dies können mehrere hundert Kilo sein - als auch bei hohen Kurvengeschwindigkeiten sicher fahrbar ist.

Die beiden Hinterräder sind vorzugsweise unterhalb der Ladeplattform angeordnet, damit die Ladeplattform möglichst breit gestaltet werden kann und dennoch beispielsweise durch Türen mit einer Normbreite hindurch fahren kann, und beispielsweise eine Euro-Palette auf der Ladeplattform Platz findet, vorzugsweise ohne Überstand zur Seite.

Vorzugsweise sind die Hinterräder auch gegenüber dem Lasten-Teil des Chassis gefedert, und insbesondere unabhängig voneinander gefedert, um den Fahrkomfort und auch die Fahrsicherheit zu verbessern.

Vorzugsweise ist jedes der Hinterräder an einer Schwinge befestigt, welche um eine Schwingenachse am Lastenteil verschwenkbar ist. Bevorzugt wird die Schwinge mittels einer um die Schwingenachse herum oder an der Schwingenachse angeordneten Schwing-Teleskopkörpers in Richtung Normallage der Schwinge vorgespannt.

Wenigstens ein Teil der Ladeplattform ist vorzugsweise gegenüber dem Lasten-Teil des Chassis schwenkbar, insbesondere hochklappbar, befestigt, sodass insbesondere am oder im Ladeteil des Chassis gut geschützt, und dennoch nicht störend, unterhalb der Ladeplattform die Radaufhängung, insbesondere die Achse, gegebenenfalls die besagte Schwinge und vor allem die beiden Antriebsmotoren und die die elektrische Energie liefernden Batterien untergebracht werden können, was einen niedrigen Schwerpunkt und eine beschädigungssichere Konstruktion ergibt.

Die Ladeplattform des Lasten-Teiles kann eine ebene Befestigungsfläche, vorzugsweise mit Befestigungsmöglichkeiten für das Ladegut, sein oder einen Kastenaufbau entweder mit festen Seitenwänden und Dach oder einen Planenaufbau oder nur Seitenwände aufweisen.

Als Fahrbremse werden vorzugsweise die elektrischen Motoren und deren Verzögerungswirkung bei fehlender Stromzufuhr und dann vorhandene Wirkung als Generator eingesetzt, und es ist vorzugsweise keine mechanische Fahrbremse am Lasten-Fahrrad vorhanden.

Eine mechanisch wirkende Feststellbremse ist dagegen vorzugsweise vorhanden, wobei in der bremsenden Stellung zwei Bremselemente kraftschlüssig gegeneinander gepresst sind oder auch formschlüssig ineinander einrasten.

Vorzugsweise ist eines der Bremselemente eine Bremsscheibe und das andere Bremselement eine oder mehrere gegen die Bremsscheibe wirkende Bremsbacken, die mittels eines Vorspannelements, wie etwa einer oder mehrerer Federn, gegen die Bremsscheibe gepresst sind und mittels eines elektrischen Elements in der gelösten Stellung gehalten werden, sodass bei fehlender Stromzufuhr die Feststellbremse automatisch aktiviert wird.

Die bisher beschriebene Bauform des Lastenfahrrades wird primär nur über den beschriebenen elektrischen Antrieb der Hinterräder bewegt, sodass also dabei kein für ein Fahrrad normalerweise üblicher Tretantrieb existiert, bei dem der Fahrer durch Drehen einer Tretkurbel mit seinen Beinen eines der Räder des Lastenfahrrades in Drehung versetzt.

Dies hat jedoch den Nachteil, dass ein solches Lastenfahrrad
- dann rechtlich nicht mehr als Fahrrad, sondern als selbstfahrendes Fahrzeug eingestuft wird und damit in den meisten Ländern völlig andere Bedingungen, insbesondere Sicherheitsvorschriften, erfüllen muss und
- bei einem Ausfall des elektrischen Antriebes, beispielsweise aufgrund einer leeren Batterie, das Lastenfahrrad außer durch Schieben nicht mehr bewegbar ist, beispielsweise um zur nächsten Ladestation zum Nachladen der Batterie zu gelangen.

Aus diesen Gründen kann es sinnvoll sein, das Lastenfahrrad mit einem zusätzlichen Tretantrieb auszustatten, sodass das Fahrrad lediglich durch das Drehen der üblichen zweiarmigen Tretkurbel mit daran befestigten Pedalen durch die Beine des Fahrers bewegt werden kann.

Die Elektromotoren müssen für einen solchen zusätzlichen Tretantrieb vorzugsweise über einen Freilauf verfügen, damit mittels des Tretantriebes nur der Rollwiderstand des beladenen oder unbeladenen Fahrrades zu überwinden ist, und nicht zusätzlich der dann als Generator wirkende Motor der Hinterräder anzutreiben ist.

Dabei ist auch hier die Tretkurbel vorzugsweise drehbar um eine Kurbelachse gelagert, die vorzugsweise wie üblich am Treffpunkt von Unterrohr und Sattelstrebe in einem Tretlager gelagert ist.

Wegen der relativen Verschwenkbarkeit von Fahrer-Teil und Last-Teil des Chassis zueinander um eine in Fahrtrichtung liegende, vorzugsweise horizontal verlaufende, Schwenkachse ist eine übliche Kettenverbindung von einem drehfest mit der Kurbel verbundenen Kettenrad über eine Kette oder eine Zahnriemen zu einem Ritzel auf dem anzutreibenden Rad zwischen den anzutreibenden Hinterrädern nur dann möglich, wenn der Schwenkwinkel zwischen Fahrrad-Teil und Last-Teil so begrenzt ist, dass aufgrund des vorhandenen Abstandes zwischen Tretlager und dem den Hinterrädern zugeordnetem Ritzel noch nicht zu einem Abspringen der Kette oder des verwendeten Zahnriemens führt.

Falls eine mechanische Wirkverbindung von der Tretkurbel zu wenigstens einem der Räder des Fahrrades vorgesehen ist, könnte diese auch theoretisch zu dem lenkbaren Vorderrad bestehen, was jedoch einen erheblichen mechanischen Aufwand darstellt.

Eine mechanische Wirkverbindung zu dem wenigsten einen Hinterrad - für die wenigen Notfälle, in denen das Fahrrad rein mechanisch angetrieben werden soll, genügt die Wirkverbindung mit nur einem der beiden Hinterräder, solange wenigstens das andere über einen Freilauf verfügt - kann die Wirkverbindung von der Tretkurbel zu dem wenigstens einen Hinterrad statt über eine übliche Ketten- oder Zahnriemen-Verbindung stattdessen auch über eine drehbare Welle erfolgen, die dann vorzugsweise im Unterzug des Chassis - welches zwischen Fahrrad-Teil und Lasten-Teil getrennt ist und dazwischen die Schwenkstelle aufweist - hindurch verlaufen kann vom Fahrer-Teil zum Lasten-Teil.

Verschärft wird das Problem dann, wenn die Hinterräder - wie optional vorgesehen - einzeln, also unabhängig voneinander gegenüber dem Chassis gefedert sind und damit in Querrichtung nicht in allen Fahrsituationen zueinander fluchten.

Eine konstruktiv wesentlich einfachere Lösung stellt dagegen eine rein elektrische Wirkverbindung zwischen der Tretkurbel im Fahrer-Teil und dem elektrischen Antrieb für die Hinterräder im Last-Teil dar. Zu diesem Zweck ist am Fahrer-Teil ein elektrischer Generator angeordnet, der mit der Tretkurbel in mechanischer Wirkverbindung steht, also von dieser in Drehung versetzt wird.

Der Generator kann mit seiner Rotationsachse direkt auf der Tretkurbelachse angeordnet sein oder parallel zu dieser versetzt am Fahrer-Teil des Chassis befestigt sein und von der Tretkurbel über einen üblichen Ketten- oder Zahnriemen-Antrieb über diese kurze Distanz angetrieben, also in Drehung versetzt, werden.

Der vom Generator durch Treten der Tretkurbel erzeugte Strom wird über eine elektrische Leitung, die vom Generator zum Last-Teil führt, entweder direkt in die Elektromotoren und / oder in die Batterie eingespeist, abhängig von den Möglichkeiten der vorhandenen elektrischen Steuerung.

Sobald der Generator also ausreichend Strom und von ausreichender Stärke erzeugt hat, lässt sich das Lastenfahrrad durch aktivieren des elektrischen Antriebes der Hinterräder in Gang setzen.

Falls eine Feststellbremse vorhanden ist, die im stromlosen Zustand automatisch in die Bremsstellung geht, benötigt diese Feststellbremse zusätzlich eine manuelle Lösemöglichkeit, beispielsweise einen Lösehebel, der die Feststellbremse in die bremsende Stellung - bei fehlenden Strom - anpressende Feder in die Lösestellung zurückdrücken und dort halten kann.

An dem Lastenteil, insbesondere dessen Ladeplattform, kann ein Trailer mittels einer Trailer-Kupplung gelenkig wenigstens um eine Hochachse, die vorzugsweise lotrecht zur Ladeplattform steht, mit seinem vorderen Teil befestigt sein. Der Trailer läuft mit an seinem hinteren Teil vorhandenen Trailer-Rädern auf dem Untergrund.

Vorzugsweise ist der Trailer als Auflieger ausgebildet und liegt mit dem vorderen Ende seiner Auflieger-Plattform auf der Oberseite der Ladeplattform des Last-Teiles des Lasten-Fahrrades auf und wird von diesem gezogen.

Die Kupplung ist dabei vorzugsweise nach Art einer Sattelschlepper-Kupplung ausgebildet, also mit einem Königszapfen, der vorzugsweise von der Unterseite der Auflieger-Plattform nach unten vorsteht und in die nach hinten und oben offene Ausnehmung einer etwa horizontal liegenden SattelPlatte, die auf der Ladeplattform befestigt ist, eingeführt und darin fixiert werden kann.

Der Trailer, insbesondere der Auflieger, weist ferner eine aktivierbare und deaktivierbare Stütze in seiner vorderen Hälfte auf, um die Trailer-Plattform auch im von dem Rest des Lasten-Fahrrades abgekoppelten Zustand in einer etwa horizontalen Lage abstützen zu können.

Die Hinterräder können auch seitlich neben der Ladeplattform nach oben ragen, aber maximal so weit, dass sie die Unterseite der Trailer-Plattform eines an der Ladeplattform befestigten, insbesondere darauf aufliegenden, Trailers nicht erreichen, und auch seitlich vorzugsweise nicht über den Trailer vorstehen.

Die Trailer-Kupplung ist dabei vorzugsweise an dem gegenüber dem Lastenteil nicht schwenkbaren Teil der Ladeplattform befestigt.

Vorzugsweise kann die Trailer-Kupplung von dem sie tragenden Teil des Lasten-Teiles des Chassis, insbesondere der Ladeplattform, auf einfache Art und Weise, vorzugsweise ohne Werkzeug, entfernt werden oder so verlagert werden, insbesondere unter das Niveau der Oberseite der Ladeplattform abgesenkt, werden, dass dann die Ladeplattform an ihrer gesamten Oberfläche eben ist und selbst zum Lastentransport benutzt werden kann

### c) Ausführungsbeispiele

Ausführungsformen gemäß der Erfindung sind im Folgenden anhand der Figuren beispielhaft näher beschrieben. Es zeigen:
- Figur 1a, b:: perspektivische Ansichten auf eine erste Bauform des Lasten-Fahrrades von schräg links und schräg rechts oben,
- Figur 1c:: eine Aufsicht auf das Lasten-Fahrrad gemäß Figur 1a, b von oben,
- Figur 2:: einer perspektivische Ansicht gemäß Figur 1a mit Last auf der Ladeplattform,
- Figur 3a, b:: das Lasten-Fahrrad in unterschiedlichen perspektivischen Ansichten bei hochgeklappter Ladeplattform,
- Figur 4a, b:: das Lasten-Fahrrad in unterschiedlichen perspektivischen Ansichten mit zur Seite geneigtem Fahrerteil,
- Figur 4c:: eine Schnittdarstellung, betrachtet in Fahrtrichtung,
- Figur 5a:: eine perspektivische Ansicht des Lasten-Fahrrades von unten,
- Figur 5b:: die perspektivische Ansicht eines einzelnen Hinterrades mit Aufhängung und Bremse,
- Figur 5c:: die perspektivische Ansicht eines einzelnen Hinterrades mit Aufhängungsbremse und antreibendem Motor,
- Figur 6a:: eine zweite Bauform des Lasten-Fahrrades mit zusätzlichem Tret-Antrieb in der Seitenansicht,
- Figur 6b:: das Lastenfahrrad gemäß Figur 6a in perspektivischer Ansicht,
- Figur 6c:: das Lastenfahrrad gemäß Figur 6b mit zusätzlicher Schutzverkleidung des Tret-Antriebes,
- Figur 7a, b:: eine dritte Bauform des Lastenfahrrades mit Trailer in der Seitenansicht und der Aufsicht.

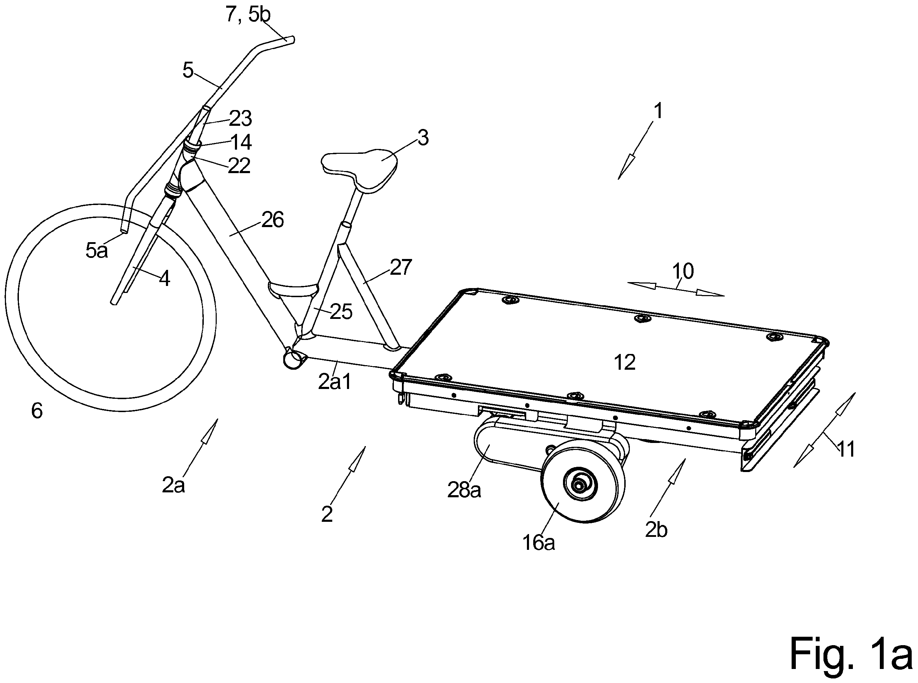

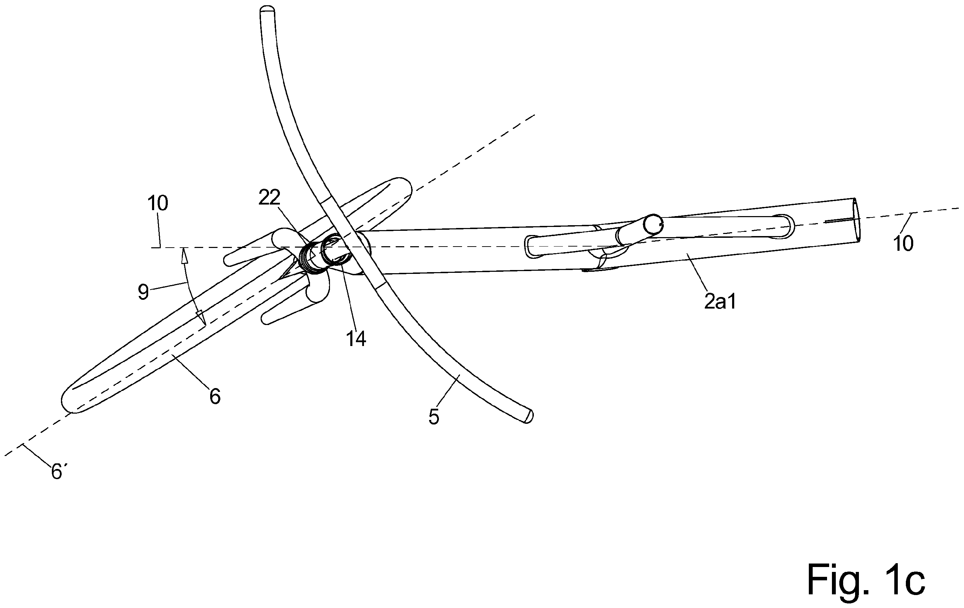

Zunächst sei darauf hingewiesen, dass Lenker 5 und Sattel 3 lediglich in der Figur 1a dargestellt sind, und in Figur 1c nochmals der Lenker 5 eingeschlagen, also bei Kurvenfahrt, dargestellt ist, diese Teile ansonsten bei den übrigen Darstellungen aus Vereinfachungsgründen jedoch weggelassen wurden.

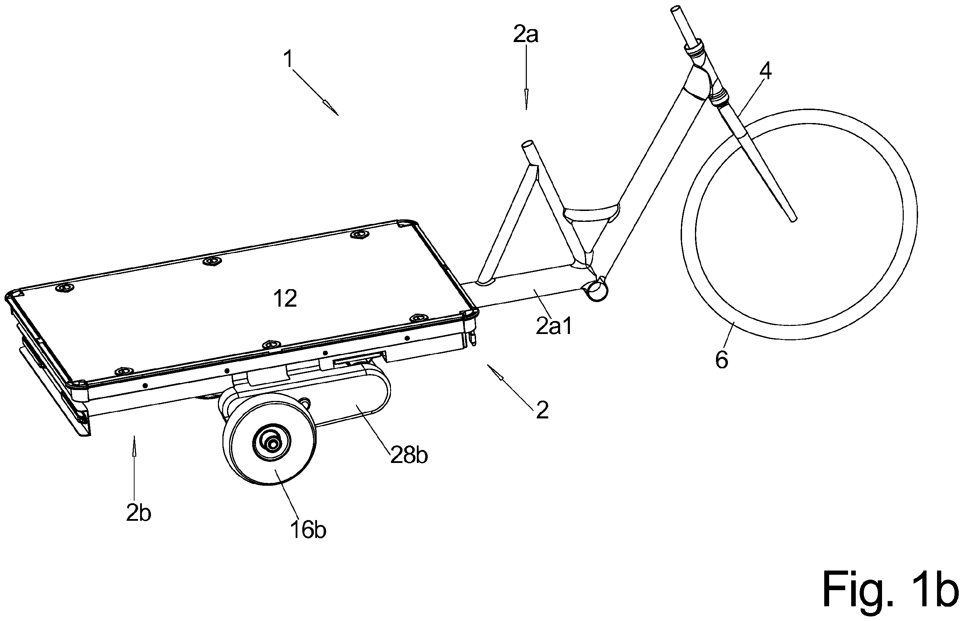

Die Figuren 1a, b zeigen am besten den Grundaufbau des erfindungsgemäßen Lasten-Fahrrades:
Der Fahrer-Teil 2a des Chassis 2 entspricht im Wesentlichen dem eines konventionellen Fahrrades - bis auf die Dimensionierung der Rahmenteile - also mit einen Sattelrohr 25, an dessen oberen Ende der Sattel 3 befestigt ist, sowie einem Unterrohr 26, welches mit dem unteren Ende des Sattelrohres 25 fest verbunden, in der Regel verschweißt ist und schräg nach oben vorne ansteigt. Am oberen Ende des Unterrohres 26 ist das Steuerrohr 22 befestigt, in der Regel verschweißt oder verlötet, ist, durch welchen der Gabelschaft 23 der darin drehbaren Vorderrad-Gabel 4 hindurch geführt ist, sowie einem am oberen Ende des Gabelschaftes 23 drehfest befestigten Lenker 5, vorzugsweise in seinen beidseitigen Enden jeweils mit einem Handgriff 5a, 5b ausgestattet.

Das Sattelrohr 25 ist über eine Querstrebe gegenüber dem Unterbau 26 versteift, da vorzugsweise kein Oberrohr vorhanden ist, was aber vorhanden sein könnte und deshalb für die Erfindung unwesentlich ist.

Die vom oberen Bereich der Sattelstrebe 25 schräg nach hinten unten weisende Sattelstütze 27 stützt den ebenfalls vom unteren Ende, allerdings nach hinten verlaufenden, Unterzug 2a₁ des Fahrradteils 2a des Chassis oder Rahmen 2 ab, wobei die in der Aufsicht betrachtete Verlaufsrichtung von Unterzug 2a und Unterrohr 26 die Längsrichtung 10 des Lasten-Fahrrades definieren, die bei Geradeausfahrt auch die Fahrtrichtung 10 ist.

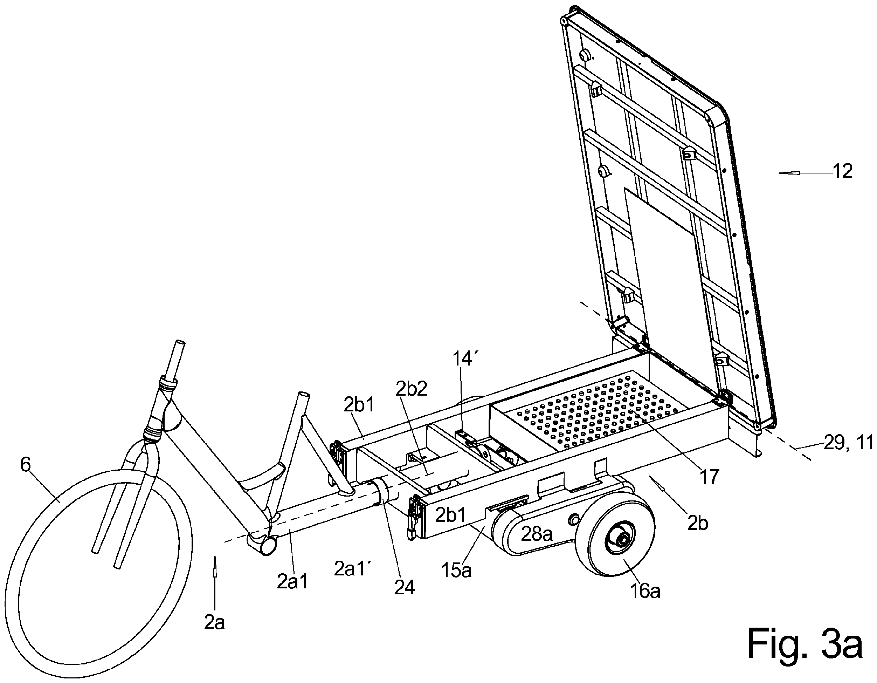

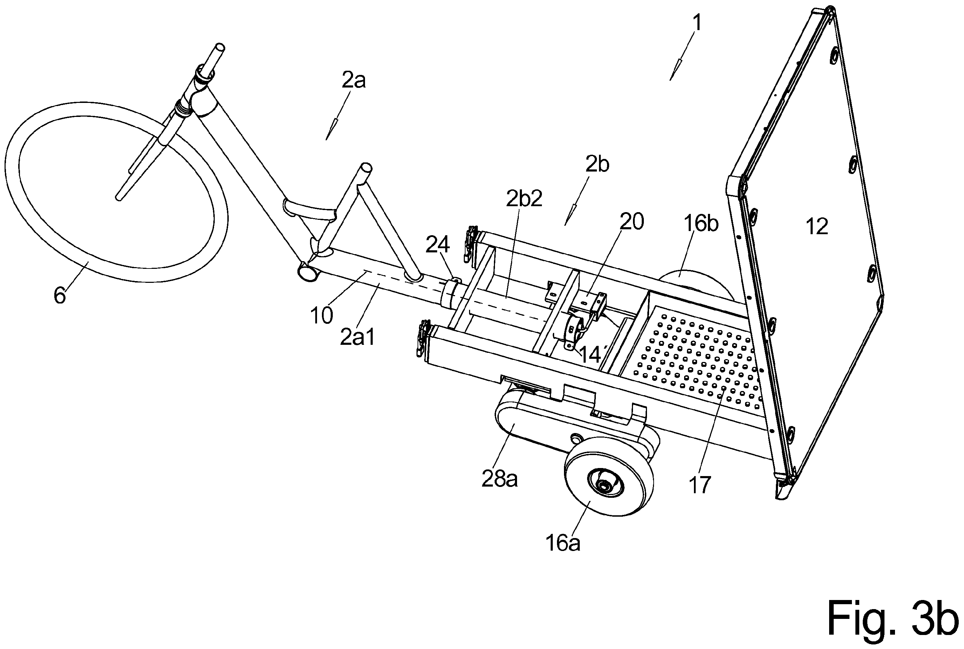

Der sich an dieses Fahrradteil 2a des Chassis 2 nach hinten anschließende Lasten-Teil 2b des Chassis 2 ist mit dem hinteren Ende des Unterzuges 2a₁ verbunden und vorzugsweise in der Aufsicht kastenförmig gestaltet, wobei dessen in Querrichtung 11 zueinander beabstandete Längsträger 2b₁ von Querträgern auf Abstand gehalten werden, wie am besten in Figur 3a, b ersichtlich. Der Lasten-Teil 2b des Chassis 2 trägt auf seiner Oberseite eine Ladeplattform 12, die über den in der Aufsicht rahmenförmigen Lasten-Teil 2b meist seitlich übersteht.

Die Ladeplattform 12 ist vorzugsweise so groß bemessen, dass sie ohne Überstand eine Euro-Palette 21 aufnehmen kann.

Zwei in Querrichtung 11 beabstandete Hinterräder 16a ,b sind an dem Lasten-Teils 2b des Chassis 2 unterhalb der Ladeplattform 12 angeordnet, sodass die Hinterräder 16 a, b seitlich außerhalb und teilweise im Höhenbereich der Längsträger 2b₁ des Lasten-Teils 2b des Chassis 2 liegen.

Die Hinterräder 16a, b stehen vorzugsweise seitlich nicht über die Ladeplattform 12 vor.

Die beiden Hinterräder 16a,b sind elektrisch angetrieben mittels jeweils eines Motors 15a,b.

Wie die Figuren 3a, b zeigen, ist die Ladeplattform 12 schwenkbar am Lasten-Teil 2b des Chassis 2 befestigt, nämlich um eine Klappachse 29, die in Querrichtung 11 im oberen Bereich des hinteren Endes des Lasten-Teils 2b angeordnet ist, sodass das Innere des Lasten-Teils 2b - welches vorzugsweise nach unten durch einen Boden verschlossen ist - gut zugänglich ist. Dieser Innenraum des kastenförmiges Lasten-Teils 2b nimmt einerseits die Batterien 17 auf und andererseits - wie am besten in Figur 3b zu erkennen - die elektrische Steuerung 20 zum Steuern der in aller Regel elektrischen Motoren 15a, b, welche die Hinterräder 16a,b unabhängig voneinander antreiben.

Die erste wichtige Besonderheit wird bereits aus den Figuren 1a, b klar:
Am Steuerrohr ist ein Lenker-Sensor 14 angeordnet, der den Einschlagwinkel 9 des Lenkers gegenüber dem Chassis, also in diesem Fall dem Fahrer-Teil 2a des Chassis 2, misst, also wie in Figur 1c dargestellt, den Winkel zwischen der Längsrichtung 10 und der Vorderrad-Ebene 6', die die Hauptebene des Vorderrades ist.

Der Lenkersensor 14 meldet diesen Winkel 9 an die Steuerung 20, die in Abhängigkeit davon die Drehzahlen der beiden Motoren 15a, b für die Hinterräder 16a, b und damit deren Drehzahl unterschiedlich steuert, in der Regel die Drehzahl des kurven-äußeren Hinterrades schneller wählt.

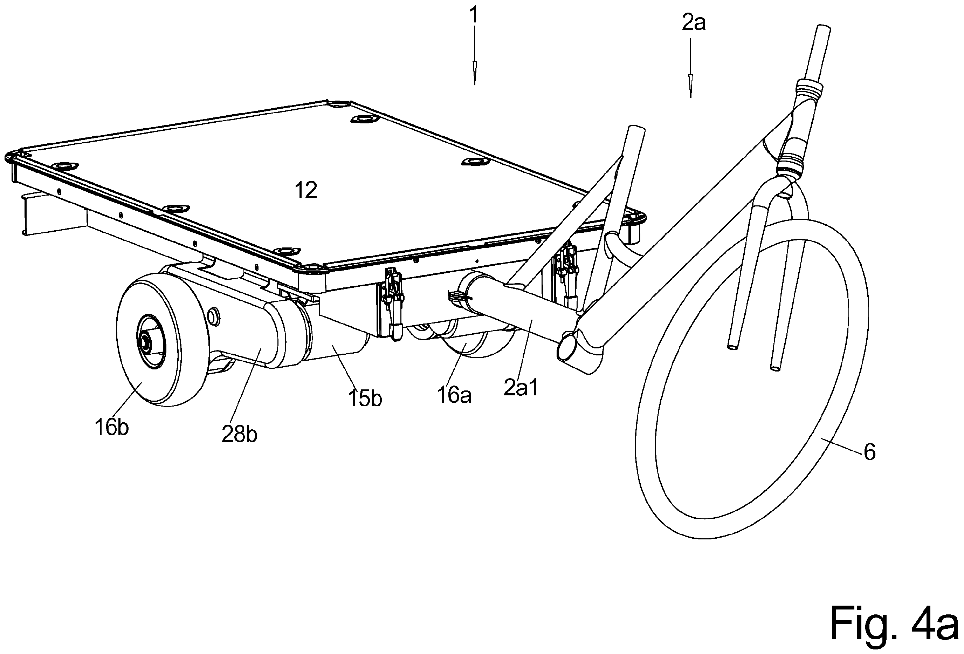

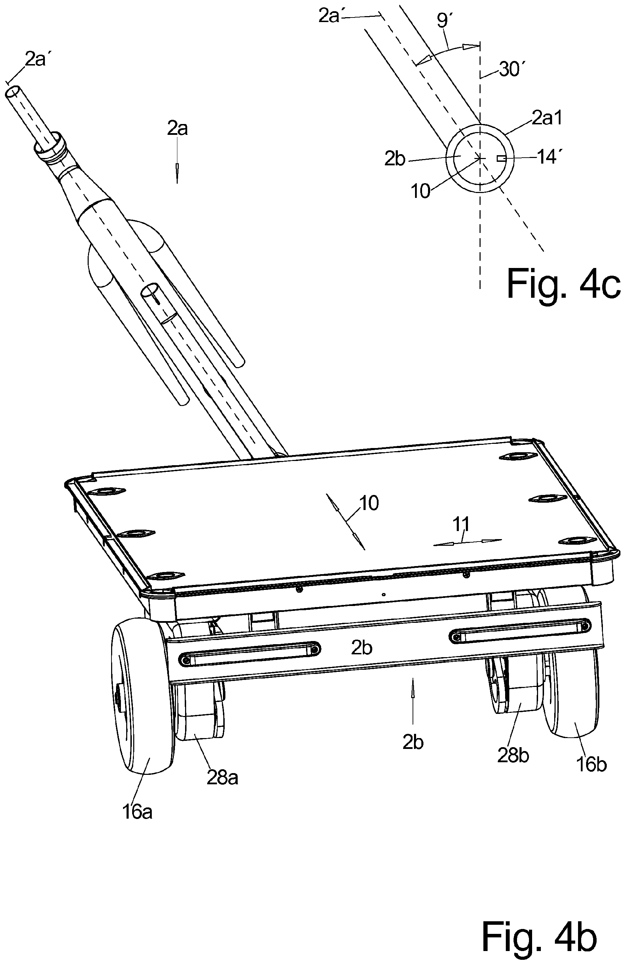

Die wichtige zweite erfindungsgemäße Neuerung ist den Figuren 4a, b, c sowie Figur 3a, b zu entnehmen:
Der gesamte Fahrer-Teil 2a kann gegenüber dem Lasten-Teil 2b des Chassis um die Längsrichtung 10 des Lastenfahrrades geneigt werden, sodass sich der Fahrer-Teil 2a in die Kurve legen kann.

Wie am besten in Figur 3a, b zu erkennen, ist zu diesem Zweck der in der Regel horizontal verlaufende Unterzug 2a₁ an seinem hinteren Ende als Lagerungsstelle 24 in einem sich daran nach hinten anschließenden Rohrstutzen drehbar gelagert, wobei dieser Rohrstutzen 2b₂ Bestandteil des Lasten-Teils 2b des Chassis 2 ist.

Der Neigungswinkel 9' zwischen der Vertikalebene 30' und der Fahrerteil-Ebene 2a' wird von einem Neigungssensor 14' gemessen und an die Steuerung 20 gemeldet, der vorzugsweise an der Lagerstelle 24 angeordnet ist.

Die Steuerung berücksichtigt bei der Steuerung der Drehzahl der beiden unabhängigen Motoren 15a, b für die beiden Hinterräder 16a,b auch den Neigungswinkel 9', um eine sichere Kurvenfahrt zu ermöglichen, wobei vorzugsweise das Lastenfahrrad 1 auch einen - nicht dargestellten - Geschwindigkeitssensor aufweist und/oder einen Drehzahlsensor an den Motoren oder Rädern und/oder einen Drehzahlsensor am Vorderrad 6.

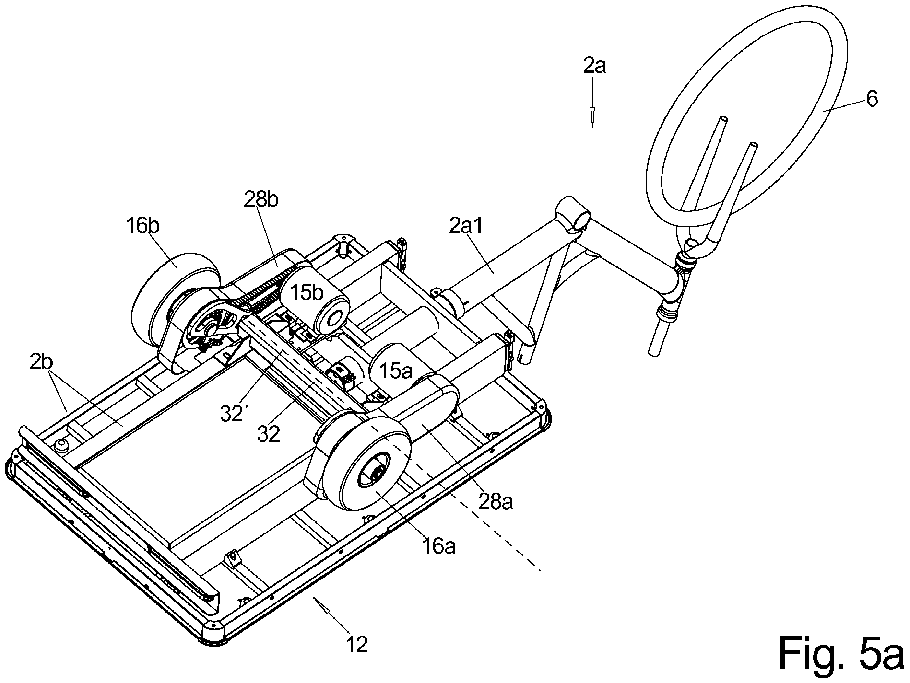

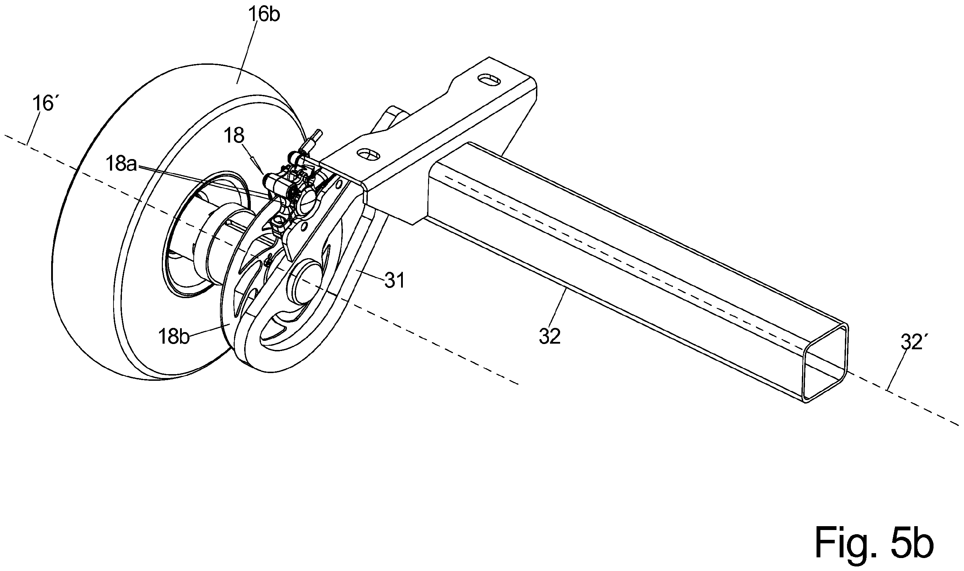

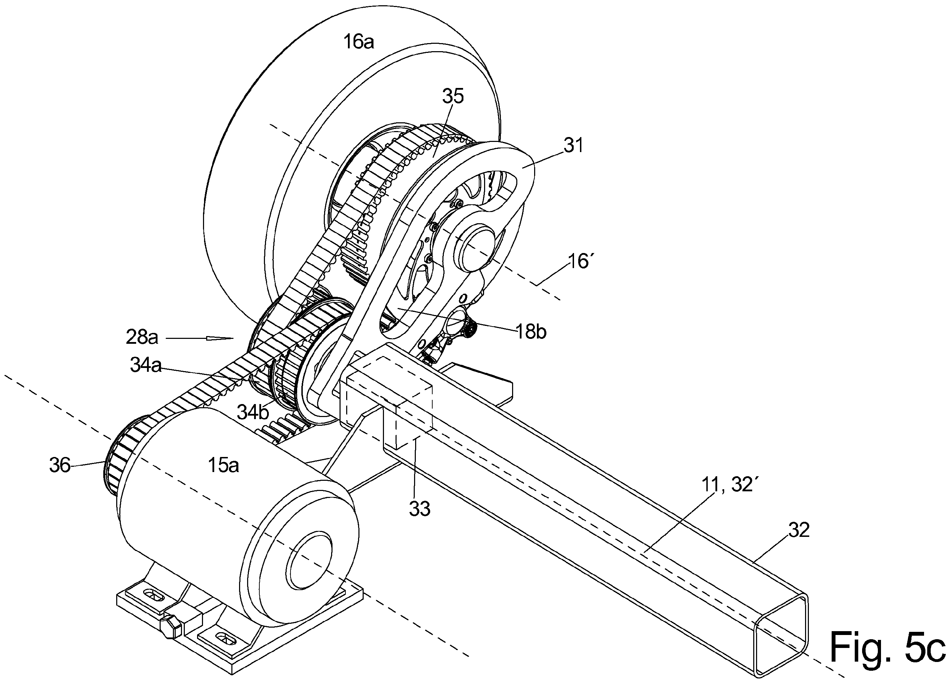

Aus der Ansicht von unten gemäß Figur 5a und den Einzeldarstellungen jeweils einer Radeinheit gemäß Figur 5b, c wird der Antrieb und die Radaufhängung der Hinterräder 16a, b sowie die Bremse 18, die vorzugsweise nur als Feststellbremse benutzt wird, klar:
In Figur 5b ist zunächst die - an sich bekannte - Ausführung einer Fahrrad-Scheibenbremse zu erkennen, bei der die Bremsscheibe 18b mitdrehend mit dem jeweiligen Hinterrad, hier 16b, befestigt ist und gemeinsam mit diesem Hinterrad, zum Beispiel 16b, um die Radachse 16' dreht, und nicht mitdrehende Bremsbacken 18a beidseits der Bremsscheibe 18b angeordnet sind und beim Anpassen an die Bremsscheibe 18b das entsprechende Hinterrad 16a,b abbremsen bzw. festsetzen.

Das Rad 16b ist zusammen mit der Bremsscheibe 18b im freien Ende einer Schwinge 31 gelagert, an der auch die Bremsbacken 18a befestigt sind, und diese Schwinge 31 ist - wie besser in Figur 5c zu erkennen - schwenkbar um die Schwingenachse 32' am Chassis befestigt, die in diesem Fall durch die Verlaufsrichtung eines in Form eines Vierkantrohres, jedenfalls eines Rohres mit polygonem Querschnitt, ausgebildeten Achskörpers 32 definiert wird der in Querrichtung 11 verläuft.

Dabei ist zwischen dem Befestigungspunkt der Schwinge 31 am Achskörper 32 und dem Achskörper 32 ein Torsionskörper 33 angeordnet, der die Schwinge 31 bei Auslenkung aus ihrer Normallage mit Drehmoment in Richtung Normallage zurück beaufschlagt. Dies kann im einfachsten Fall ein Hartgummi-Block sein, dessen Stirnseite fest mit dem Befestigungsbereich der Schwinge 31 verbunden ist und dessen Außenkontur in die Innenkontur des Achskörpers 32 passt.

In Figur 5c ist ferner die Ausbildung des Getriebes 28, diesem Fall 28a, zwischen dem fest am Chassis montierten Motor 15a und dem davon angetriebenen Rad 16a erkennbar, die in den übrigen Figuren bereits mit einer Verkleidung abgedeckt dargestellt ist:
Dabei drehen um die Schwingenachse 32' zwei axial beabstandete Vermittler-Ritzel 34a,b, die drehfest miteinander verbunden sind, und von denen das eine über einen ersten Zahnriemen oder Kette mit dem Mutterritzel 36 auf der Abtriebswelle des Motors 15a angetrieben wird und das andere über einen zweiten Zahnriemen ein Schwingenritzel 35 antreibt, das drehfest mit dem Hinterrad 16a mitdrehend auf der Radachse 16' angeordnet ist.

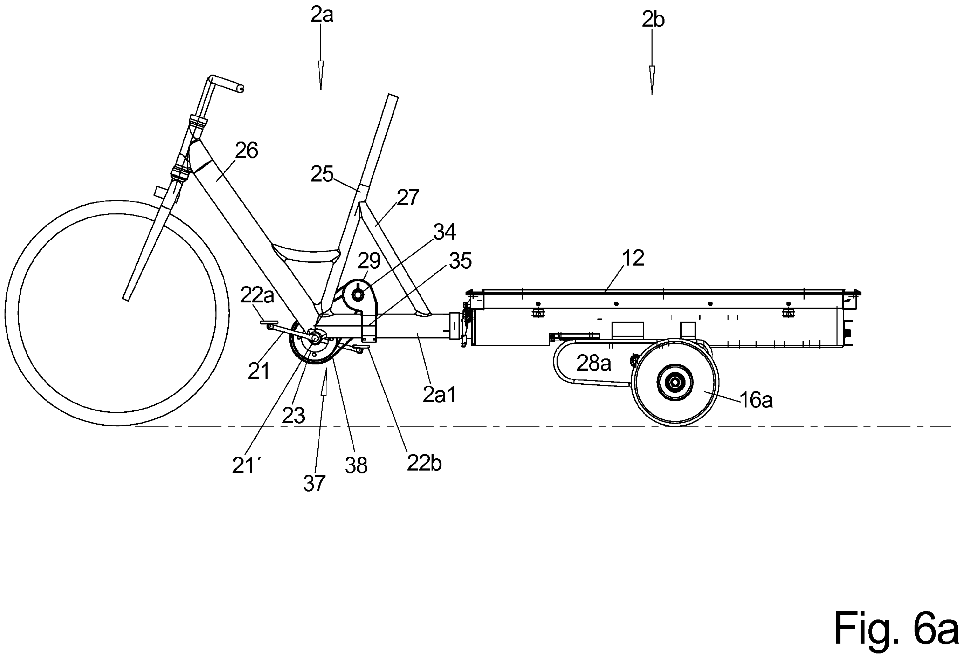

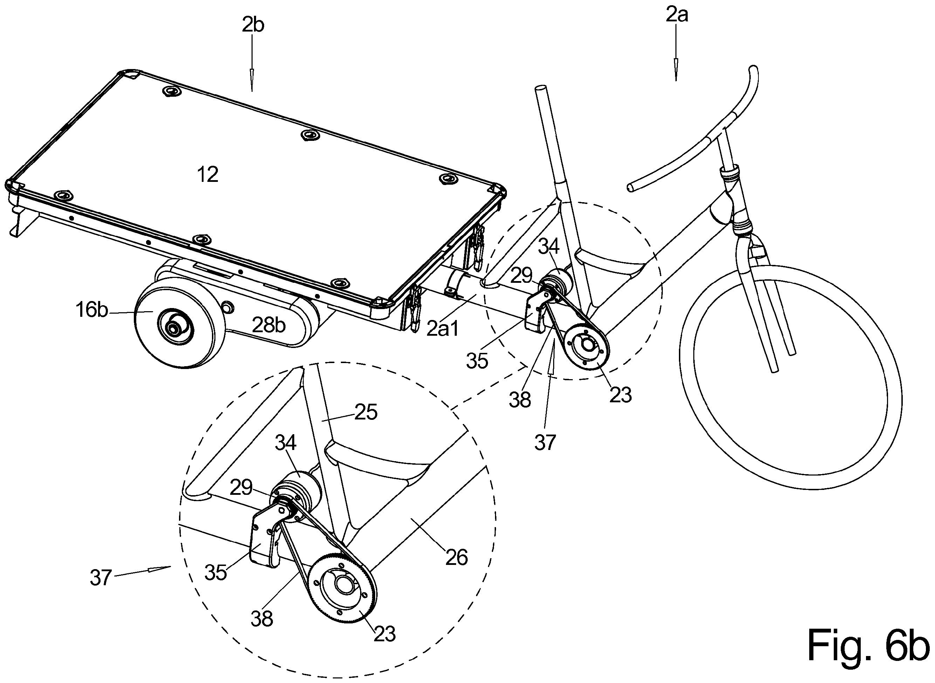

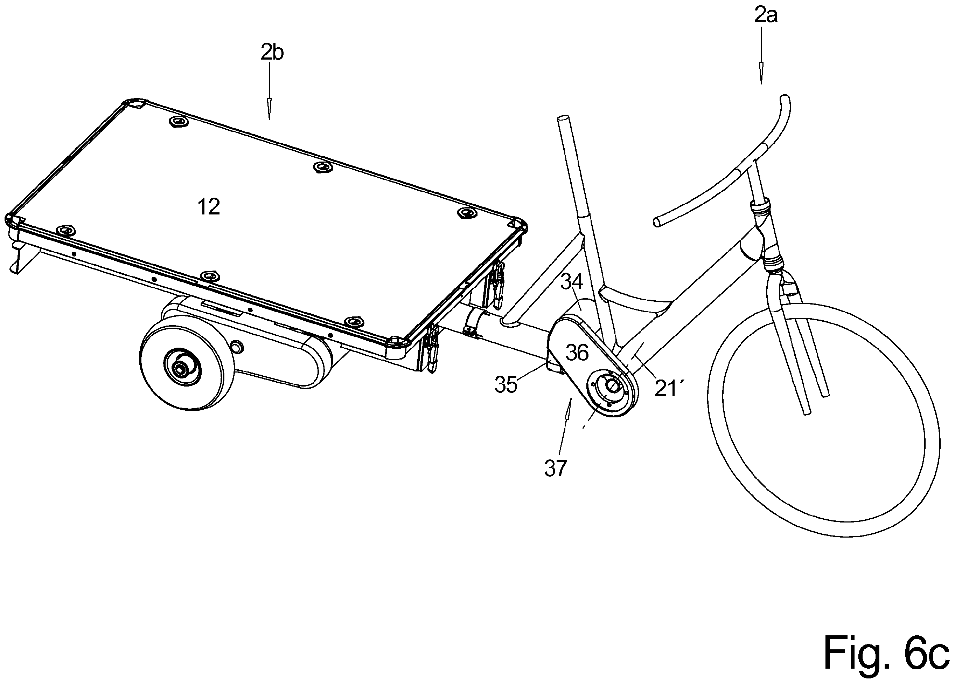

Die Figuren 6a, b, c zeigen in Seitenansicht und perspektivischer Ansicht eine Lösung mit einem zusätzlichen Tret-Antrieb:
Dort ist zu erkennen, dass - wie bei einem normalen Fahrrad - eine zweiarmige Tretkurbel 21 um eine in Querrichtung verlaufende Tretlagerachse 21', die etwa am Treffpunkt von Unterrohr und Sattelstrebe durch ein Tretlager verläuft, vorhanden ist, die an ihren Enden jeweils ein nach außen ragendes Pedal 22a, b zum darauf treten mit den Füßen des Fahrers aufweist.

Drehfest, insbesondere koaxial, mit der Tretkurbel 21 ist ein Kettenrad 23 angeordnet, über dessen Außenverzahnung eine Kette 38 läuft.

Diese Kette 38 treibt ein Ritzel 29 an, welches in der Ebene des Kettenrades 23 und zu diesem beabstandet liegt, und über welches die Kette 38 ebenfalls läuft, jedoch ist im Gegensatz zu einem normalen Fahrrad dieses Ritzel 29 drehfest auf der Motorwelle eines elektrischen Generators 34 angeordnet.

Der Generator 34 ist relativ nah am Kettenrad 23 am Fahrer-Teil 2a über eine Halterung 35 befestigt, wie in den Figuren 6a, b zu erkennen, und zwar im Winkel zwischen dem Unterzug 2a1 und der Sattelstrebe 25, vorzugsweise oberhalb und in der Aufsicht betrachtet im Breiten-Bereich des Unterzuges 2a1. Die Tretkurbel 21 mit den Pedalen 22a,b ist aus Übersichtlichkeitsgründen nur in der dargestellt.

Die elektrische Leitung vom Generator 34 zu den elektrischen Motoren ist ebenfalls nicht zeichnerisch dargestellt.

Figur 6c unterscheidet sich von der Darstellung der Figur 6b durch die zusätzlich in der Praxis vorhandene Schutzverkleidung 36, die die umlaufenden Kette 38 abdeckt.

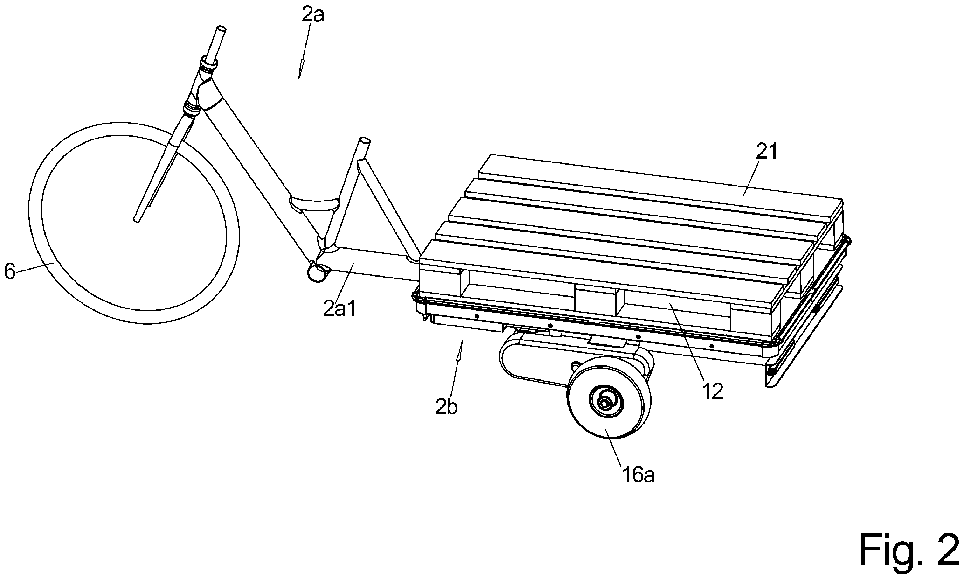

Der Vorteil dieser Bauform besteht u.a. darin, dass sie an einem Lastenfahrrad, wie zu den Figuren 1 bis 5 ausschließlich mit Elektroantrieb ausgestattet beschrieben, sehr leicht nachrüstbar ist, sofern im Fahrrad-Teil des Chassis von vornherein eine in Querrichtung verlaufende Durchgangsöffnung zum Anordnen von Tretlagern und einer Tretwelle für die beiderseitigen Tretkurbeln vorhanden ist.

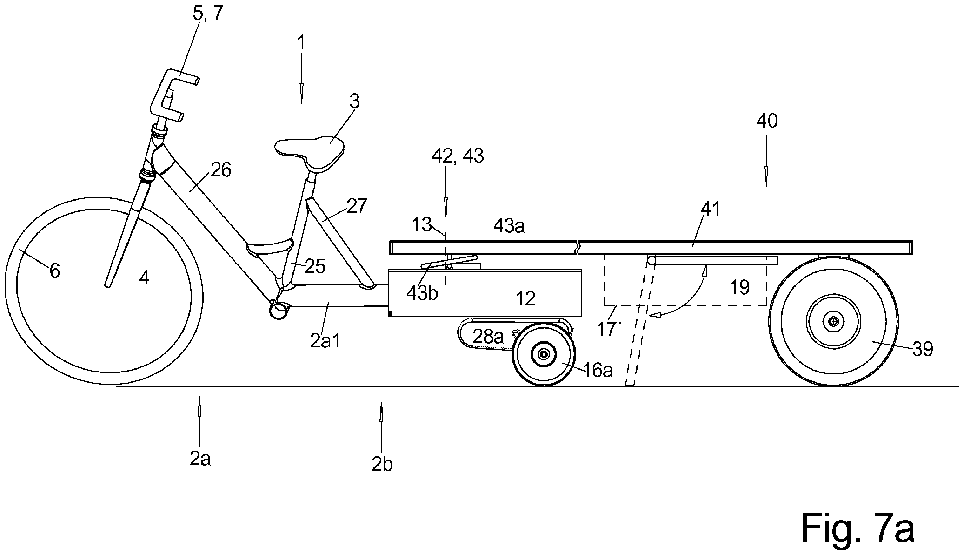

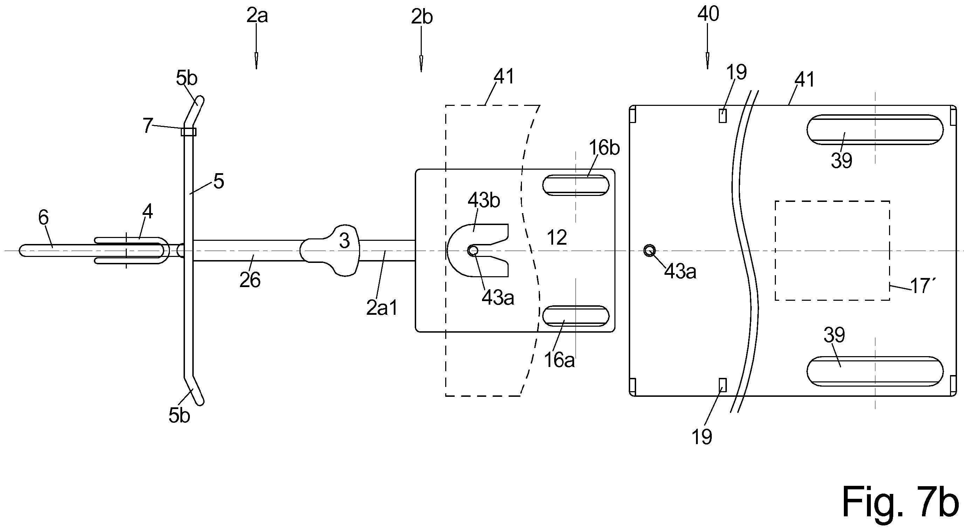

Figur 7a zeigt eine dritte Bauform des Lastenfahrrades 1 mit aufgesatteltem Trailer in Form eines Aufliegers 40 in der Seitenansicht, die Figur 7b in der Aufsicht, wobei in dieser Aufsicht der Auflieger 40 noch im abgekuppelten Zustand, unmittelbar vor dem Ankuppeln, dargestellt ist und der angekuppelte Zustand lediglich mit gestrichelten Linien in Figur 7b angedeutet ist.

Wie am besten die Seitenansicht der Figur 7a erkennen lässt, ist der an dem hinteren Lasten-Teil 2b des Lasten-Fahrrades 1 angekoppelte Trailer 40 als Auflieger 40 ausgebildet, so dass sich also die Auflieger-Plattform 41 im abgekuppelten Zustand oberhalb der Ladeplattform 12 des Lasten-Teiles 2b des Chassis 2 befindet und mittels einer Trailerkupplung 42, hier einer Sattelkupplung 43, demgegenüber um eine Hochachse 13 verschwenkbar für Kurvenfahrt ist.

Wie bei einer Sattelkupplung 43 üblich, ragt im vorderen Bereich in der Mitte der Auflieger-Plattform 41 ein Königszapfen 43a nach unten, der - wie am besten in der Aufsicht in Figur 7b zu erkennen - durch rückwärts Einfahren des Lastenfahrrades mit der auf der Ladeplattform 12 befestigten Sattelplatte 43b in deren nach hinten offene Ausnehmung einfährt und darin verrastet, also fixiert wird, wie mit den gestrichelten Linien in Figur 7b angedeutet.

Der hintere Bereich der Auflieger-Plattform 41 wird durch zwei quer zur Fahrtrichtung, also seitlich zueinander beanstandete, Trailer-Räder 39 abgestützt gegenüber dem Untergrund, die dementsprechend wesentlich größer sein können als die Hinterräder 16a, b des Lasten-Teiles 2b des Lasten-Fahrrades 1.

Wie Figur 7b erkennen lässt, befinden sich die Trailer-Räder 39 in der Aufsicht betrachtet unterhalb der Auflieger-Plattform 41, um dessen Breite nicht zusätzlich zu vergrößern.

Wie anhand der Figur 7a vorstellbar, könnte ein Trailer 40 auch an der Rückseite der Ladeplattform 12 des Lastenfahrrades 1 beweglich um eine Hochachse angekoppelt sein, wobei sich dann vorzugsweise die Oberseiten von Ladeplattform 12 und Trailer Plattform 41 auf gleicher Höhe befinden könnten.

Bei dieser Lösung kann der Trailer 40 auch im vorderen Bereich Trailer-Räder 39 aufweisen und dann vorzugsweise auch eine Deichsel besitzen und als normaler Anhänger mit gelenkter Vorderachse, an der die Deichsel angreift, ausgeformt sein.

In der bevorzugten Ausführungsform als Trailer, der lediglich im hinteren Bereich Trailer-Räder 39 aufweist, besitzt der Trailer 40 - vorzugsweise in seinem vorderen Bereich, insbesondere seiner vorderen Hälfte - eine Stütze 19 zum Abstützen des Trailers 40, also dessen Trailer-Plattform 41, im nicht angekuppelten Zustand, um die Trailer-Plattform 41 dabei etwa in der Horizontalen zu halten, damit zum Ankuppeln das Lastenfahrrad 1 von vorne darunter gefahren werden kann.

In dargestellten Fall befindet sich beidseits der längs Mitte je eine um eine horizontale Querachse schwenkbare Stütze 19, die im herab geschwenkten Zustand die Trailerplattform 41 gegenüber dem Untergrund in der für das Ankuppeln benötigten Höhe abstützt, und nach dem Ankuppeln unter die Trailer-Plattform 41 hoch geklappt werden kann.

Unter der Trailerplattform 41 kann auch eine zusätzliche Batterie 17' vorhanden sein, um die Reichweite des Trailer-Gespannes zu erhöhen, wobei dann die entsprechenden Vorrichtungen zum Verbinden dieser Batterie 17' mit den Elektro-Motoren 15a, b des Lastenfahrrades vorhanden sein müssen.

### BEZUGSZEICHENLISTE

- 1: Lastenrad
- 2: Chassis
- 2a: Fahrerteil
- 2a': Fahrerteil-Ebene
- 2a1: Unterzug
- 2a1': Schwenkachse
- 2b: Lastenteil
- 3: Sattel
- 4: drehbare Gabel
- 5: Lenker
- 6: Vorderrad
- 7: Geschwindigkeits-Geber
- 8: Feststellbremse
- 9: Einschlagwinkel
- 10: Fahrtrichtung
- 11: Querrichtung
- 12: Ladeplattform
- 13: Hochachse
- 14: Lenk-Sensor
- 14': Neigungs-Sensor
- 15a, b: Motor
- 16a, b: Hinterrad
- 16': Rad-Achse
- 17: Batterie
- 18: Bremse, Feststellbremse
- 18a, b: Bremselement
- 19: Stütze
- 20: Steuerung
- 21: Tretkurbel
- 21': Kurbelachse
- 22a, b: Pedal
- 23: Kettenrad
- 24: Lagerung-Stelle
- 25: Sattelstrebe
- 26: Unterrohr
- 27: Sattelstütze
- 28 a, b: Getriebe
- 29: Ritzel
- 30': Vertikal-Ebene
- 31: Schwinge
- 32: Achskörper
- 32': Schwingen-Achse
- 33: Torsions-Körper
- 34: Generator
- 35: Halterung
- 36: Schutzverkleidung
- 37: Tret-Antrieb
- 38: Kette
- 39: Trailer-Rad
- 40: Trailer, Auflieger
- 41: Auflieger-Plattform
- 42: Auflieger-Kupplung
- 43: Sattel-Kupplung
- 43a: Königszapfen
- 43b: Sattelplatte

## Patentansprüche

1. Lasten-Fahrrad (1) mit einem Chassis (2), umfassend
- ein Fahrer-Teil (2a) des Chassis (2) mit
- einem Sattel (3) für den Fahrer, einer im Fahrer-Teil (2a) schwenkbaren Gabel (4) mit einem drehfest daran befestigten Lenker (5) und einem darin gelagerten Vorderrad (6),
- einem Geschwindigkeits-Geber (7), der insbesondere am Lenker (5) befestigt ist,
- einem, insbesondere horizontal nach hinten weisenden, Unterzug (2a1) des Fahrerteiles (2a), welcher schwenkbar an
- einem Lasten-Teil (2b) des Chassis (2) befestigt ist, welches umfasst
- eine Ladeplattform (12),
- zwei in Querrichtung (11) zur Längsrichtung des Chassis (2), also normalerweise zur Fahrtrichtung (10), zueinander beabstandete Hinterräder (16a, b) und
- zwei elektrische Motoren (15a, b), die mit je einem der Hinterräder (16a, b) wirkverbunden sind,
**gekennzeichnet durch**
- einen Sensor (14) zum Detektieren des Einschlagwinkels (9) der Gabel (4) gegenüber dem Fahrer-Teil (2a) und zum Senden des detektierten Einschlagwinkels (9) an eine Steuerung (20) und
- die Steuerung (20), die die Messsignale des Sensors (14) erhält und abhängig davon die Motoren (15a, b) für die Kurvenfahrt unterschiedlich schnell antreibt.

2. Lasten-Fahrrad nach Anspruch 1,
**dadurch gekennzeichnet, dass**
- das Fahrerteil (2a) des Chassis (2) um eine in Längsrichtung des Chassis (2), also normalerweise die Fahrtrichtung (10), verlaufende horizontale Schwenkachse (2a1') gegenüber dem Lasten-Teil (2b) des Chassis (2) verschwenkbar ist,
- insbesondere indem der Unterzug (2a1) gegenüber dem Lasten-Teil (2b) um die Schwenkachse (2a1') verschwenkbar ist.

3. Lasten-Fahrrad nach Anspruch 2,
**dadurch gekennzeichnet, dass**
- ein weiterer Sensor (14') zum Detektieren des Schwenkwinkels (9') zwischen dem Unterzug (2a1) und dem Lasten-Teil (2b) vorhanden ist,
- die Steuerung (20) auch die Messsignale des weiteren Sensors (14') erhält und abhängig davon die Motoren (15a, b) für die Kurvenfahrt unterschiedlich schnell antreibt.

4. Lasten-Fahrrad nach einem der vorhergehenden Ansprüche, **dadurch gekennzeichnet, dass**
- die Hinterräder (16a, b) unter der Ladeplattform (12) angeordnet sind und/oder
- die Ladeplattform (12) am Lasten-Teil (2b) schwenkbar, insbesondere hochklappbar, befestigt ist.

5. Lasten-Fahrrad nach einem der vorhergehenden Ansprüche, **dadurch gekennzeichnet, dass**
- auf der Ladeplattform (12) ein Kastenaufbau mit festen Seitenwänden und Dach oder ein Planenaufbau angeordnet ist
und/oder
- Batterien (17) und/oder die Steuerung (20) unterhalb der Ladeplattform (12) insbesondere in geschlossenen, nach Anheben der Ladeplattform (12) nach oben offenen, Fächern angeordnet sind.

6. Lasten-Fahrrad nach einem der vorhergehenden Ansprüche,
**dadurch gekennzeichnet, dass**
eine Fahrbremse aus den elektrischen Motoren (15a, b) und deren Verzögerungs-Wirkung als Generator bei fehlender Stromzufuhr besteht.

7. Lasten-Fahrrad nach einem der vorhergehenden Ansprüche,
**dadurch gekennzeichnet, dass**
das Lasten-Fahrrad einen Tret-Antrieb (37) aufweist,
- der eine zweiseitige Tretkurbel (21) aufweist, die drehbar um eine Kurbelachse (21') im Fahrer-Teil (2a) gelagert ist und an deren Enden Pedale (22a, b) befestigt sind, wobei
- der Tret-Antrieb (37) mit wenigstens einem der Räder (6, 16a, b) in Wirkverbindung steht.

8. Lasten-Fahrrad nach Anspruch 7,
**dadurch gekennzeichnet, dass**
der Tret-Antrieb (37) mit den Hinterrädern (16a, b) in mechanischer Wirkverbindung steht und diese insbesondere durch den Unterzug (2a1) hindurch verläuft, insbesondere in Form einer in dessen Längsrichtung in seinem Inneren verlaufenden Welle.

9. Lasten-Fahrrad nach Anspruch 7,
**dadurch gekennzeichnet, dass**
- der Tret-Antrieb (37) mit wenigstens einem der Räder, insbesondere mit den beiden Hinterrädern (16a, b) in elektrischer Wirkverbindung steht, indem
- der Tret-Antrieb mit einem elektrischen Generator (34), insbesondere über eine Kette (38) oder einen Zahnriemen,
- der elektrische Generator (34) über eine elektrische, stromführende Verbindung mit den Elektro-Motoren (15a, b) und/oder einer Batterie (17) verbunden ist.

10. Lasten-Fahrrad nach Anspruch 9,
**dadurch gekennzeichnet, dass**
der elektrische Generator (34) mit seiner Rotationsachse parallel zur Kurbelachse (21') am Fahrer-Teil (2a) des Chassis (2) befestigt ist, insbesondere am Unterzug (2a1).

11. Lasten-Fahrrad nach einem der vorhergehenden Ansprüche,
**dadurch gekennzeichnet, dass**
das Lasten-Fahrrad einen Trailer (40) umfasst, der zwei in Querrichtung (11) zur Fahrtrichtung (10) zueinander beabstandete Trailerräder (39) aufweist und gelenkig mittels einer Trailer-Kupplung (42) mit dem Lasten-Teil (2b), insbesondere dessen Ladeplattform (12), leicht lösbar verbunden ist.

12. Lasten-Fahrrad nach Anspruch 11,
**dadurch gekennzeichnet, dass**
der Trailer (40) ein Auflieger (40) ist, dessen Auflieger-Plattform (41) mit ihrem vorderen Bereich auf der Ladeplattform (12) aufliegt und gelenkig wenigstens um eine Hochachse (13), die insbesondere lotrecht auf der Ladeplattform (12) steht, befestigt ist.

13. Lasten-Fahrrad nach Anspruch 12,
**dadurch gekennzeichnet, dass**
- die Trailer-Kupplung (42) nach dem Funktionsprinzip einer Sattel-Kupplung (43), also mit Königszapfen (43 a) und Sattelplatte (43b), als Auflieger-Kupplung (42) ausgebildet ist
und/oder
- der Trailer (40), insbesondere der Auflieger (40), wenigstens eine aktivierbare und deaktivierbare Stütze (19) in seiner vorderen Hälfte, insbesondere deren Unterseite, aufweist zum Abstützen des Trailers (40) im abgekuppelten Zustand.

## Claims

1. A cargo bicycle (1) with a frame (2), comprising:
- a rider portion (2a) of the frame (2) including
- a saddle (3) for the rider, a fork (4) that is pivotable in the rider portion (2a) with a handlebar (5) attached at the fork torque-proof, and a front wheel (6) supported in the fork,
- a speed encoder (7) that is attached in particular at the handle bar (5),
- a lower tube (2a1) of the rider portion (2a) wherein the lower tube is oriented in particular horizontally backward and wherein the lower tube is pivotably arranged at
- a cargo portion (2b) of the frame (2), the cargo portion including
- a cargo platform (12),
- two rear wheels (16a, b) that are offset from each other in a transversal direction (11) relative to the longitudinal direction to the frame (2), thus typically relative to the driving direction (10), and
- two electric motors (15a, b) that are operatively connected with one of the rear wheels (16a, b),
**characterized by**
- a sensor (14) configured to detect a deflection angle (9) of the fork (4) relative to the rider portion (2a) and to transmit the detected deflection angle (9) to a control (20), and
- the control (20) receives the measuring signals of the sensor (14) and drives the motors (15a, b) at different speeds for driving around turns as a function of the measuring signals.

2. The cargo bicycle according to claim 1,
**characterized in that**
- the rider portion (2a) of the frame (2) is pivotable about a horizontal pivot axis (2a1') that extends in a longitudinal direction of the frame (2), thus typically the driving direction (10), wherein the pivoting is performed relative to the cargo portion (2b) of the frame (2),
- in particular **in that** the lower tube (2a1) is pivotable about the pivot axis (2a1') relative to the cargo portion.

3. The cargo bicycle according to claim 2,
**characterized in that**
- an additional sensor (14') is provided for detecting a pivot angle (9') between the lower tube (2a1) and the cargo portion (2b),
- the control (20) also receives the measurement signals of the additional sensor (14') and drives the motors (15a, b) at different speeds for driving around turns as a function of the measuring signals of the additional sensor.

4. The cargo bicycle according to one of the preceding claims,
**characterized in that**
- the rear wheels (16a, b) are arranged below the cargo platform (12),
and/or
- the cargo platform (12) is pivotably attached at the cargo portion (2b), in particular so that the cargo platform can be folded up.

5. The cargo bicycle according to one of the preceding claims **characterized in that**
- a box superstructure with solid sidewalls and a roof or a tarp superstructure is arranged on the cargo platform (12) and/or
- batteries (17) and/or the control (20) are arranged below the cargo platform (12), in particular enclosed compartments that are open in upward direction after the cargo platform (12) is raised.

6. The cargo bicycle according to one of the preceding claims,
**characterized in that**
a drive brake uses the electric motors (15a, b) to provide deceleration when the electric motors are used as generators and not supplied with current.

7. The cargo bicycle according to one of the preceding claims,
**characterized in that**
the cargo bicycle includes a pedal drive (37) including
- a two-sided pedal crank (21) that is supported in the rider portion (2a) rotatable about a crank axis (21'), and wherein pedals (22a, b) are attached at ends of the pedal crank, wherein
- the pedal drive (37) is operatively connected with at least one of the wheels (6, 16a, b)

8. The cargo bicycle according to claim 7,
**characterized in that**
the pedal drive (37) is mechanically operatively connected with the rear wheels (16a, b) and wherein the mechanical operative connection runs in particular through the lower tube (2a1) and is configured in particular as a shaft that runs longitudinally in an interior of the lower tube.

9. The cargo bicycle according to claim 7,
**characterized in that**
- the pedal drive (37) is electrically operatively connected with at least one of the wheels, in particular with the two rear wheels (16a, b) **in that**
- the pedal drive (37) is connected with an electrical generator (34), in particular by a chain (38) or a timing belt,
- the electrical generator (34) is connected with the electrical motors (15a, b) through an electrical current conducting connection and/or a battery (17).

10. The cargo bicycle according to claim 9,
**characterized in that**
the electric generator (34) is attached with its rotation axis parallel to the crank axis (21') at the rider portion (2a) of the frame (2), in particular at the lower tube (2a1).

11. The cargo bicycle according to one of the preceding claims,
**characterized in that**
the cargo bicycle includes a trailer (40) that includes two trailer wheels (39) that are offset relative to each other in the transversal direction (11) relative to driving direction (10) and that is pivotably connected by a trailer coupling (42) with the cargo portion (2b), in particular its cargo platform (12) so that the trailer is easily disconnectable.

12. The cargo bicycle according to claim 11,
**characterized in that**
the trailer (40) is a semi-trailer (40) whose front portion rests on the cargo platform (12) and which is pivotably linked about a vertical axis (13) which is in particular orthogonal to the cargo platform (12).

13. The cargo bicycle according to claim 12,
**characterized in that**
- the trailer coupling (42) is configured as a saddle coupling (43), thus with a kingpin (43a) and a saddle plate (43b) forming a semi coupling (42),
and/or
- the trailer (40), in particular the semi trailer (40) includes at least one activatable and deactivatable support (19) in its front half, in particular at
its bottom side for supporting the trailer (40) in a decoupled condition.

## Revendications

1. Bicyclette de transport (1) avec un châssis (2), comprenant
- une partie cycliste (2a) du châssis (2) avec
- une selle (3) pour le cycliste, une fourche (4) pivotable dans la partie cycliste (2a) avec un guidon (5) attaché lié en rotation et une roue avant (6) montée dans celle-ci,
- un actionneur de vitesse (7) qui est en particulier attache au guidon (5),
- une partie inférieure (2a1) de la partie cycliste (2a) orientée en particulier vers l'arrière attachée de manière pivotable à
- une partie de charge (2b) du châssis (2), comprenant
- un plateau de chargement (12),
- deux roues arrière (16a, b), espacées dans la direction transversale (11) à la direction longitudinal du châssis (2), i.e. normalement au sens de circulation (10), et
- deux moteurs électriques (15a, b) en liaison active avec une respectivement une des roues arrière (16a, b),
**caractérisé par**
- un capteur (14) pour détecter l'angle de braquage (9) de la fourche (4) par rapport à la partie cycliste (2a) et pour transmettre l'angle de braquage (9) détecté à une commande (20), et
- la commande (20) recevant les signaux de mesure du capteur (14) et entraînant en fonction de ceux-ci avec des vitesses différentes les moteurs (15a, b) pour la conduite dans un virage.

2. Bicyclette de transport selon la revendication 1,
**caractérisé en ce que**
- la partie cycliste (2a) du châssis (2) peut être pivotée par rapport à la partie de charge (2b) du châssis (2) autour d'un axe de pivotement (2a1') horizontale s'étendant dans la direction longitudinale du châssis (2), c'est-à-dire normalement le sens de circulation (10),
- en particulier **en ce que** la partie inférieure (2a1) peut être pivotée par rapport à la partie de charge (2b) autour de l'axe de pivotement (2a1').

3. Bicyclette de transport selon la revendication 2,
**caractérisé en ce que**
- un autre capteur (14') est présent pour détecter l'angle de pivotement (9') entre la partie inférieure (2a1) et la partie de charge (2b),
- la commande (20) reçoit également les signaux de mesure de l'autre capteur (14') et entraine en fonction de ceux-ci avec des vitesses différentes les moteurs (15a, b) pour la conduite dans un virage.

4. Bicyclette de transport selon une des revendications précédentes,
**caractérisé en ce que**
- les roues arrière (16a, b) sont arrangées en dessous du plateau de chargement (12) et/ou
- le plateau de chargement (12) est attaché de manière pivotable à la partie de charge (2b), en particulier rabattable vers le haut.

5. Bicyclette de transport selon une des revendications précédentes,
**caractérisé en ce que**
- une structure de caisse avec des parois latérales fixes et une toiture ou une structure à bâche est arrangée sur le plateau de chargement (12)
et/ou
- des piles (17) et/ou la commande (20) sont arrangées en dessous du plateau de chargement (12), en particulier dans des compartiments fermés, ouverts vers le haut après le relèvement du plateau de chargement (12).

6. Bicyclette de transport selon une des revendications précédentes,
**caractérisé en ce que**
un frein de route comprend les moteurs électriques (15a, b) et leurs effet retard en tant que générateur lorsqu'il n'y a pas d'alimentation électrique.

7. Bicyclette de transport selon une des revendications précédentes,
**caractérisé en ce que**
la bicyclette de transport comprend un actionnement de pédalage (37)
- comprenant une manivelle de pédalage bilatérale (21) supportée de manière rotative autour d'un axe de manivelle (21') dans la partie de cycliste (2a) et aux extrémités de laquelle des pédales (22a, b) sont montées, où
- l'actionnement de pédalage (37) est en liaison active avec au moins une des roues (6, 16a, b).

8. Bicyclette de transport selon la revendication 7,
**caractérisé en ce que**
l'actionnement de pédalage (37) est en liaison active mécanique avec les roues arrière (16a, b) et **en ce que** la liaison passe en particulier à travers la partie inférieure (2a1), en particulier sous forme d'un arbre s'étendant dans son intérieur dans la direction longitudinale.

9. Bicyclette de transport selon la revendication 7,
**caractérisé en ce que**
- l'actionnement de pédalage (37) est en liaison active électrique avec au moins une des roues, en particulier avec les deux roues arrière (16a, b) de la manière suivante
- l'actionnement de pédalage est lié avec un générateur électrique (34), en particulier via une chaîne (38) ou une courroie dentée,
- le générateur électrique (34) est lié aux moteurs électriques (15a, b) et/ou avec une pile (17) via une connexion électrique conduisant un courant.

10. Bicyclette de transport selon la revendication 9,
**caractérisé en ce que**
le générateur électrique (34) est attaché à la partie cycliste (2a) du châssis (2), en particulier à la partie inférieure (2a1), avec son axe de rotation parallèle à l'axe de manivelle (21').

11. Bicyclette de transport selon une des revendications précédentes,
**caractérisé en ce que**
la bicyclette de transport comprend une remorque (40) qui comprend deux roues de remorque (39) mutuellement espacées dans la direction transversale (11) par rapport au sens de circulation (10) et qui est liée de manière facilement amovible à la partie de charge (2b), en particulier au plateau de chargement (12), de manière articulée au moyen d'un accouplement de remorque (42).

12. Bicyclette de transport selon la revendication 11,
**caractérisé en ce que**
la remorque (40) est une semi-remorque (40) dont le plateau de semi-remorque (41) repose sur le plateau de chargement (12) avec sa partie avant et est attaché de manière articulée au moins atour d'un axe vertical (13), qui est en particulier perpendiculaire au plateau de chargement (12).

13. Bicyclette de transport selon la revendication 12,
**caractérisé en ce que**
- l'accouplement de remorque (42) est adapté en tant qu'accouplement de semi-remorque (42) selon le principe fonctionnel d'un attelage à sellette (43), i.e. avec une cheville ouvrière (43 a) et une plaque de sellette (43b) et/ou
- la remorque (40), en particulier la semi-remorque (40), comprend au moins un support pouvant être activé et désactivé (19) dans sa moitié avant, en particulier de son côté inférieur, pour supporter la remorque (40) dans l'état désaccouplé.
